# EUROPÄISCHE PATENTANMELDUNG

(11) **EP 3 002 717 A1**
(43) Veröffentlichungstag der Anmeldung: **06.04.2016**
(21) Anmeldenummer: 15187149.8
(22) Anmeldetag: 28.09.2015
(51) Int. Cl.: G06Q 10/06, G06Q 10/10, G06Q 50/10

(54) **VERFAHREN UND SYSTEM ZUM ERFASSEN DER ZUM ABSCHLUSS UND ZUR DURCHFÜHRUNG EINES WARTUNGS- UND/ODER REPARATURVERTRAGES ERFORDERLICHEN INFORMATIONEN**

(30) Priorität: 30.09.2014 LU 92561
(71) Anmelder: MCon Group AG, 9008 St. Gallen (CH)
(72) Erfinder: Dietrich, Christian, 65205 Wiesbaden (DE)
(74) Vertreter: Grabovac, Dalibor

(57) **Zusammenfassung**

Die Erfindung betrifft ein Verfahren zum Erfassen der zum Abschluss und zur Durchführung eines Wartungs- und/oder Reparaturvertrages betreffend ein Fahrzeug, insbesondere ein Kraftfahrzeug, erforderlichen Informationen. Das Verfahren umfasst den Schritt des Herstellens einer, vorzugweise drahtlosen, Netzwerkverbindung zu einem Server, mit einem mobilen Endgerät. Darüber hinaus den Schritt des Eingebens in das mobile Endgerät und/oder Auswählen mit dem mobilen Endgerät aus einer auf dem mobilen Endgerät dargestellten Identitäts-Auswahldarstellung wenigstens einer Identitäts-Information, die eine Identifikation des Fahrzeugs erlaubt. In einem weiteren Schritt erfolgt ein Identifizieren von wenigstens einer zu wartenden und/oder zu reparierenden und/oder auszutauschenden Fahrzeugkomponente des Fahrzeuges, und der Schritt des Eingebens einer Fahrzeugkomponenten-Information bezüglich der identifizierten Fahrzeugkomponente in das mobile Endgerät und/oder des Auswählens einer Darstellung der identifizierten Fahrzeugkomponente aus einer auf dem mobilen Endgerät dargestellten Fahrzeugkomponenten-Auswahldarstellung und Erzeugen einer Fahrzeugkomponenten-Information auf der Basis der Auswahl.

## Beschreibung

Die Erfindung betrifft ein Verfahren zum Erfassen der zum Abschluss und zur Durchführung eines Wartungs- und/oder Reparaturvertrages betreffend ein Fahrzeug, insbesondere ein Kraftfahrzeug, erforderlichen Informationen.

Damit in einer Reparaturwerkstatt, insbesondere in einer Kraftfahrzeug-Reparaturwerkstatt, Wartungs- und/oder Reparaturarbeiten an einem Fahrzeug durchgeführt werden können ist es zwingend erforderlich, zuvor Informationen beispielsweise über Art und Umfang der durchzuführenden Arbeiten und über die Identität des Auftraggebers zu erfassen. Das Erfassen dieser Informationen erfolgt üblicherweise im Rahmen der sogenannten Dialogannahme in den Räumen der Reparaturwerkstatt am Schreibtisch des Servicemitarbeiters der Reparaturwerkstatt, weil dieser darauf angewiesen ist, Daten in einen Computer eingeben zu können und Informationen aus dem Computer entnehmen zu können.

Das Fahrzeug, an dem die Wartungs- und/oder Reparaturarbeiten durchgeführt werden sollen, wird hierbei oftmals gar nicht in Augenschein genommen. Zumeist nur wenn es absolut erforderlich ist, verlässt der Servicemitarbeiter seinen Computer-Arbeitsplatz, um unmittelbar Details zusammen mit dem Kunden am Fahrzeug anzusehen. Allerdings ist er gezwungen, danach wieder zu seinem Computer-Arbeitsplatz zurückzukehren, um die erforderlichen Information dann eingeben zu können beziehungsweise erforderliche Informationen auslesen zu können. In der Praxis ist dies sehr umständlich. Darüber hinaus besteht die Gefahr, dass wichtige Detailinformationen oder Mängel, die dem Fahrzeughalter gar nicht bewusst sind, im Ergebnis nicht erfasst werden.

Es ist die Aufgabe der vorliegenden Erfindung ein technisches Verfahren insbesondere für den Servicemitarbeiter einer Reparaturwerkstatt bereit zu stellen, das ein effizienteres, zuverlässigeres und präziseres Erfassen der zur Durchführung eines Wartungs- und/oder Reparaturauftrages an einem Fahrzeug erforderlichen Informationen ermöglicht.

Diese Aufgabe wird durch ein Verfahren gelöst, das durch folgende Schritte gekennzeichnet ist:
a. Herstellen einer, vorzugweise drahtlosen, Netzwerkverbindung zu einem Server, mit einem mobilen Endgerät,
b. Eingeben in das mobile Endgerät und/oder Auswählen mit dem mobilen Endgerät aus einer auf dem mobilen Endgerät dargestellten Identitäts-Auswahldarstellung wenigstens einer Identitäts-Information, die eine Identifikation des Fahrzeugs erlaubt,
c. Identifizieren von wenigstens einer zu wartenden und/oder zu reparierenden und/oder auszutauschenden Fahrzeugkomponente des Fahrzeuges,
d. Eingeben einer Fahrzeugkomponenten-Information bezüglich der identifizierten Fahrzeugkomponente in das mobile Endgerät und/oder Auswählen einer Darstellung der identifizierten Fahrzeugkomponente aus einer auf dem mobilen Endgerät dargestellten Fahrzeugkomponenten-Auswahldarstellung und Erzeugen einer Fahrzeugkomponenten-Information auf der Basis der Auswahl,
e. Eingeben einer Tätigkeits-Information bezüglich der identifizierten Fahrzeugkomponente in das mobile Endgerät und/oder Auswählen einer Darstellung eines Tätigkeitstyps aus einer auf dem mobilen Endgerät dargestellten Tätigkeiten-Auswahldarstellung und Erzeugen einer Tätigkeits-Information auf der Basis der Auswahl,
f. Übertragen der eingegebenen und/oder eingelesenen und/oder ausgewählten Identitäts-Information und der Fahrzeugkomponenten-Information und der Tätigkeits-Information an den Server.

Es ist eine weitere Aufgabe der vorliegenden Erfindung ein Endgerät-Computerprogramm zur Ausführung des erfindungsgemäßen Verfahrens anzugeben.

Das Endgerät-Computerprogramm ist dadurch gekennzeichnet, dass es dazu ausgebildet und bestimmt ist, in den Arbeitsspeicher eines mobilen Endgerätes, insbesondere eines Tablet-Computers oder eines PDAs oder eines Smartphones oder eines Computers mit Touchscreens, geladen zu werden, wobei das Endgerät-Computerprogramm Programmbefehle ausweist, die es ermöglichen, das erfindungsgemäße Verfahren auszuführen, wenn das Endgerät-Computerprogramm auf dem mobilen Endgerät läuft.

Es ist eine weitere Aufgabe der vorliegenden Erfindung ein Server-Computerprogramm zur Ausführung des erfindungsgemäßen Verfahrens anzugeben.

Das Server-Computerprogramm ist dadurch gekennzeichnet, dass es dazu ausgebildet und bestimmt ist, in den Arbeitsspeicher eines Servers geladen zu werden, wobei das Server-Computerprogramm Programmbefehle aufweist, die es ermöglichen, das erfindungsgemäße Verfahren auszuführen, wenn das Server-Computerprogramm auf dem Server läuft.

Es ist darüber hinaus eine Aufgabe der vorliegenden Erfindung, ein mobiles Endgerät für den Servicemitarbeiter einer Reparaturwerkstatt anzugeben, dass es dem Servicemitarbeiter ermöglicht, effizient, zuverlässig und präzise die zum Abschluss und zur Durchführung eines Reparaturvertrages erforderlichen Informationen zu erfassen.

Diese Aufgabe wird durch ein mobiles Endgerät, insbesondere ein Tablet-Computer oder PDA oder Smartphone oder Computer mit Touchscreen, gelöst, der zur Ausführung des erfindungsgemäßen Verfahrens ausgebildet ist und/oder durch ein mobiles Endgerät, insbesondere Tablet-Computer oder PDA oder Smartphone oder Computer mit Touchscreen, auf das das erwähnte Endgerät-Computerprogramm geladen ist und/oder abläuft.

Es ist eine weitere Aufgabe der vorliegenden Erfindung einen Server anzugeben, der zur Ausführung des erfindungsgemäßen Verfahrens, insbesondere im Zusammenwirken mit wenigstens einem mobilen Endgerät, ausgebildet ist.

Diese Aufgabe wird insbesondere durch einen Server gelöst, auf den das erwähnte Server- Computerprogramm geladen ist und/oder auf dem das erwähnte Server- Computerprogramm abläuft.

Die Erfindung bietet den ganz besonderen Vorteil, dass der Servicemitarbeiter einer Reparaturwerkstatt mit dem mobilen Endgerät in der Hand den Kunden unmittelbar am Fahrzeug betreuen kann und dort die gesamte Dialogannahme durchführen kann und insbesondere sämtliche zum Abschluss und zur Durchführung eines Wartungs- und/oder Reparaturauftrags an dem Fahrzeug erforderlichen Informationen zuverlässig, präzise und vollständig erfassen kann.

Wie weiter unten im Detail aufgeführt ist, können hierbei dem Servicemitarbeiter über das mobile Endgerät eine ganze Reihe von Werkzeugen zur Verfügung gestellt werden, die es erlauben, die zur Durchführung eines Wartungs- und/oder Reparaturauftrages erforderlichen Informationen bezüglich des Auftraggebers und bezüglich des Fahrzeuges schnell und effizient und insbesondere vollständig zu erfassen. Hierbei kann insbesondere vorgesehen sein, dass dem Fahrzeughalter zusätzliche Wartung- und/oder Reparaturarbeiten angeboten werden, die über den eigentlichen Grund des Werkstattbesuchs hinausgehen; sei es, dass unterstützt durch das erfindungsgemäße Verfahren bislang unbekannte Mängel entdeckt werden oder ein zusätzlicher Wartungs- und/oder Reparaturbedarf aufgrund einer fahrzeugtypspezifischen und/oder fahrzeugkomponententypspezifischen Prognose ermittelt werden. Daher bietet die Erfindung für den Endkunden den ganz besonderen Vorteil, eine erhöhte Sicherheit in Bezug auf den technischen Zustand seines Fahrzeuges erreichen zu können.

Bei einer besonderen Ausführung ist vorgesehen, dass der Server Identitäts-Informationen einer Vielzahl von Fahrzeugen aus einer Fahrzeugdatenbank und/oder einer Kundendatenbank entnimmt und an das mobile Endgerät zum Erzeugen der Identitäts-Auswahldarstellung überträgt. Eine solche Ausführung bietet den Vorteil, dass der Servicemitarbeiter - vorausgesetzt die Identitäts-Informationen wurden zu einem früheren Zeitpunkt bereits einmal erfasst - die Identitäts-Informationen nicht selbst einzutippen braucht, sondern diese vielmehr aus der angezeigten Identitäts-Auswahldarstellung auswählen braucht.

Beispielsweise kann es sein, dass die Identitäts-Informationen bereits bei einem frühen Werkstattbesuch erfasst wurden. Es kann jedoch auch sein, dass die Identitäts-Informationen vom Endkunden im Rahmen einer, vorzugsweise internetbasierten, Suche nach einer Reparaturwerkstatt bereits eingegeben wurden.

Sobald festgestellt ist, um welches Fahrzeug es sich handelt, kann in einem nächsten Schritt - soweit dies ohnehin nicht bereits zugeordnet ist - von dem computerbasierten System ermittelt werden, um welchen Fahrzeugtyp es sich handelt und/oder welche Fahrzeugkomponententypen das Fahrzeug aufweist und/oder welche Ausstattung das Fahrzeug beinhaltet und/oder welche Motorisierung das Fahrzeug aufweist. Insbesondere kann vorteilhaft vorgesehen sein, dass der Server auf der Basis der Identitäts-Information diese Angaben ermittelt und/oder aus einer Datenbank ausliest.

Die Kenntnis des Fahrzeugtyps und/oder der Ausstattung und/oder der Motorisierung des Fahrzeugs bietet die Möglichkeit, dass das computerbasierte System dem Servicemitarbeiter eine ganze Reihe von Werkzeugen zur Verfügung stellen kann, um die erforderlichen Informationen zum Abschluss und zur Durchführung eines Wartungs- und/oder Reparaturauftrages erfassen zu können.

Bei einer besonderen Ausführung ist vorgesehen, dass das mobile Endgerät wenigstens eine durchzuführende Überprüfungstätigkeit oder eine Reihe von Überprüfungstätigkeiten anzeigt. Hierzu kann beispielsweise die Kontrolle der Flüssigkeitsstände gehören.

Insbesondere kann vorteilhaft vorgesehen sein, dass das mobile Endgerät spezifisch für das Fahrzeug wenigstens eine durchzuführende Überprüfungstätigkeit oder eine Reihe von Überprüfungstätigkeiten anzeigt. Insbesondere kann vorteilhaft vorgesehen sein, dass das mobile Endgerät unter Berücksichtigung des Fahrzeugtyps und/oder der Motorisierung und/oder der Ausstattung des Fahrzeuges wenigstens eine durchzuführende Überprüfungstätigkeit oder ein Reihe von

Überprüfungstätigkeiten anzeigt. Der Servicemitarbeiter hat hierdurch die Möglichkeit, insbesondere fahrzeugspezifisch, ganz systematisch den technischen Fahrzeugzustand zu überprüfen.

Von besonderem Vorteil ist es, wenn die angezeigten Überprüfungstätigkeiten sich speziell auf das in Rede stehende Fahrzeug beziehen. Beispielsweise ist es unsinnig und unnötig, dem Servicemitarbeiter das Kontrollieren von Zündkerzen anzuzeigen, wenn das Fahrzeug ausschließlich einen Dieselmotor aufweist, der naturgemäß keine Zündkerzen hat. Auch wäre es unsinnig und überflüssig, dem Servicemitarbeiter als Überprüfungstätigkeit ein Kontrollieren der Funktionsfähigkeit einer Klimaanlage anzuzeigen, wenn dem System ohnehin bekannt ist, dass das in Rede stehende Fahrzeug nicht mit einer Klimaanlage ausgerüstet ist. Umgekehrt ist es von besonderem Vorteil, dass das System dem Servicemitarbeiter fahrzeugspezifisch anzeigen kann, dass zusätzlich beispielsweise eine nachträglich eingebaute zusätzliche Gasanlage zu überprüfen ist und vorzugsweise, welche Handgriffe hierfür erforderlich sind. In vorteilhafter Weise kann vorgesehen sein, dass das Anzeigen der Überprüfungstätigkeit ein Anzeigen der hierzu erforderlichen Handgriffe und/oder Werkzeuge in schriftlicher und/oder bildlicher Form und/oder in Form eines Videos umfasst.

In vorteilhafter Weise kann vorgesehen sein, dass das Identifizieren von wenigstens einer zu wartenden und/oder zu reparierenden oder auszutauschenden Fahrzeugkomponente des Fahrzeugs auf der Basis des Ergebnisses der Überprüfungstätigkeit erfolgt. Dies kann in aller Regel unabhängig von dem eigentlichen Grund des Werkstattbesuches erfolgen. Insoweit hat die Erfindung den besonderen Vorteil, dass an einem Fahrzeug, das lediglich wegen eines Reifenwechsels in die Werkstatt gebracht wurde, zuverlässig weitere versteckte Mängel und/oder zusätzlicher Wartung- und/oder Reparaturbedarf entdeckt werden kann. Das Identifizieren kann sich - alternativ oder zusätzlich - jedoch auch auf Fahrzeugkomponenten beziehen, die bei der Überprüfungstätigkeit nicht aufgefallen sind.

Das Eingeben von wenigstens einer zu wartenden und/oder zu reparierenden und/oder auszutauschenden Fahrzeugkomponente des Fahrzeuges kann beispielsweise durch Eingabe eines Textes in das mobile Endgerät erfolgen. Es ist alternativ oder zusätzlich auch möglich, dass die Fahrzeugkomponente aus einer Fahrzeugkomponenten-Auswahldarstellung, die vorzugsweise fahrzeugspezifisch und/oder fahrzeugtypspezifisch angezeigt wird, erfolgt. Alternativ oder zusätzlich kann auch vorgesehen sein, dass das Eingeben der Fahrzeugkomponenten-Information ein optischen Erfassen, insbesondere ein Fotografieren und/oder Scannen, des Fahrzeuges oder eines Teil des Fahrzeugs oder eines dem Fahrzeug zugeordneten Fahrzeugdokuments beinhaltet.

Bei einer besonderen Ausführung wird die durch optisches Erfassen eingegebene Fahrzeugkomponenten-Information von dem mobilen Endgerät an den Server übertragen.

Bei einer ganz besonders vorteilhaften Ausführung wird die durch optisches Erfassen eingegebene Fahrzeugkomponenten-Information, die beispielsweise in Form einer Abbildung vorliegt, mit in einer Datenbank abgelegten und einzelnen Fahrzeugkomponenten zugeordneten Abbildungen verglichen, um durch diesen Vergleich, der vorzugsweise automatisch von dem mobilen Endgerät und/oder dem Server durchgeführt wird, den Fahrzeugkomponententyp herauszufinden. In einer Datenbank können jedem Fahrzeugkomponententyp die spezifischen technischen Daten und Preise zugeordnet sein, auf die der Servicemitarbeiter dann zugreifen kann, sobald der Fahrzeugkomponententyp, beispielsweise durch den beschriebenen Vergleich von Abbildungen oder Scannergebnissen, ermittelt ist.

Bei einer besonderen Ausführung ist vorgesehen, dass der Server anhand der eingegebenen und/oder ausgewählten Identitäts-Information wenigstens eine in einer Fahrzeugdatenbank und/oder einer Kundendatenbank gespeicherte, der Identitäts-Information zugeordnete, weitere Identitäts-Information sucht. Die weitere Identitäts-Information kann dann an das mobile Endgerät übermittelt und mit diesem dem Servicemitarbeiter angezeigt werde. Die Identitäts-Information und/oder die weitere Identitäts-Information können beispielsweise eine Information über die Ausstattung und/oder die Motorvariante und/oder den Fahrzeughalter beinhalten. Eine solche Ausführung hat den besonderen Vorteil, dass der Servicemitarbeiter lediglich eine spezifische IdentitätsInformation einzugeben oder auszuwählen braucht und ihm dann weitere, insbesondere sämtliche relevanten, Identitäts-Informationen angezeigt werden. Beispielsweise kann vorgesehen sein, dass der Servicemitarbeiter lediglich das Kennzeichen eines Fahrzeuges eingibt und ihm dann als weitere Identitäts-Informationen der Name und die Anschrift des Halters, sowie der Fahrzeugtyp und die Motorisierung angezeigt werden.

Bei einer besonderen Ausführung werden auf der Basis der Identitäts-Information und/oder der weiteren Identitäts-Information oder der wenigstens einen Fahrzeugkomponenten-Information und/oder wenigstens einen Tätigkeits-Information der Umfang und/oder der Gesamtpreis und/oder die Einzelpreise der durchzuführenden Wartungs- und/oder Reparaturarbeiten ermittelt. Insbesondere kann vorteilhaft vorgesehen sein, dass der Umfang und/oder der Gesamtpreis und/oder die Einzelpreise der durchzuführenden Wartungs- und Reparaturarbeiten von dem Server ermittelt und anschließend an das mobile Endgerät übertragen werden.

Insbesondere kann vorteilhaft vorgesehen sein, dass der Umfang und/oder die Kosten der durchzuführenden Wartungs- und/oder Reparaturarbeiten unter Berücksichtigung der in einer Kalkulationsdatenbank fahrzeugkomponententypspezifisch und/oder tätigkeitstypspezifisch abgelegten Kalkulationsinformationen ermittelt werden. Bei einer solchen Ausführung ist es von besonderem Vorteil, wenn das mobile Endgerät mit einem übergeordneten Datenbanksystem des Servers, in dem insbesondere eine Vielzahl von wartungs- und/oder reparaturrelevanten Daten fahrzeugkomponententypspezifisch und/oder fahrzeugtypspezifisch abgelegt sind, kommuniziert. Beispielsweise kann es sich hierbei um Daten der deutschen Automobiltreuhand (DAT) oder eine andere Informationszentrale handeln.

Insbesondere kann vorteilhaft vorgesehen sein, dass auf der Basis der über das mobile Endgerät eingegeben und/oder ausgewählten Informationen ein Kalkulationsmodul des Servers Umfang und/oder Gesamtpreis und/oder Einzelpreise der spezifisch bei einem Fahrzeug durchzuführenden Wartungs- und/oder Reparaturarbeiten ermittelt.

Bei einer ganz besonderen Ausführung werden von dem mobilen Endgerät in einem Offline-Betrieb, in dem kein Kontakt zum Server besteht, auf der Basis der Identitäts-Information und/oder weiteren Identitäts-Information und/oder der wenigstens einen Fahrzeugkomponenten-Information und/oder der wenigstens einen Tätigkeits-Information eine vorläufige Abschätzung bezüglich des Umfangs und/oder eine vorläufige Abschätzung bezüglich des Gesamtpreises und/oder eine vorläufige Abschätzung der Einzelpreise der durchzuführenden Wartungs- und/oder Reparaturarbeiten ermittelt.

Diese Vorgehensweise ermöglicht es auch dann die zum Abschluss eines Wartungs- und/oder Reparaturvertrages erforderlichen Informationen zu erfassen und dem Kunden zumindest vorläufig eine Auskunft über den Umfang und/oder die Preise zu geben, wenn gerade keine Verbindung zu dem Server oder zu einem für die Kalkulation benötigten Einzelserver eines Servernetzwerkes besteht. Dies beispielsweise weil von auf Grund einer technischen Störung die Verbindung vorübergehend unterbrochen ist. Allerdings ermöglicht es diese Ausführung auch, dass ein Servicemitarbeiter oder ein Gutachter auch dann die für die Wartung- und/oder Reparatur erforderlichen Informationen zu erfassen und dem Kunden eine zumindest vorläufige Auskunft zu geben, wenn sich das Fahrzeug außerhalb eines Bereichs befindet, in dem eine Verbindung zu dem Server erstellbar ist. Beispielsweise kann so ein Servicemitarbeiter oder ein Gutachter auch bei schlechter Netzabdeckung, beispielsweise in einem Schwellenland, trotzdem die für die Wartung- und/oder Reparatur erforderlichen Informationen zu erfassen und dem Kunden eine zumindest vorläufige Auskunft zu geben.

Insbesondere können die Abschätzungen im Offline-Betrieb unter Berücksichtigung der in einer in dem mobilen Endgerät gespeicherten reduzierten Kalkulationsdatenbank erfolgen. In der reduzierten Kalkulationsdatenbank können fahrzeugkomponentenspezifisch und/oder tätigkeitsspezifisch Kalkulationsinformationen abgelegt sein, wobei die reduzierte Kalkulationsdatenbank nicht für jede Ausführungsvariante eines Fahrzeugkomponententyps die zur Kalkulation erforderlichen Kalkulationsinformationen beinhaltet, sondern lediglich Umfangsdurchschnittswerte und/oder Durchschnittspreise und/oder Durchschnittspreise und/oder Teilepreise bezüglich der häufigsten Ausführungsvarianten jeweils eines Fahrzeugkomponententyps, beispielsweise der fünf häufigsten Ausführungsvarianten jeweils eines Fahrzeugkomponententyps und/oder Arbeitspreise bezüglich der häufigsten Ausführungsvarianten jeweils eines Fahrzeugkomponententyps, beispielsweise der fünf häufigsten Ausführungsvarianten jeweils eines Fahrzeugkomponententyps.

In einem weiteren Schritt können anschließend in einem Online-Betrieb, in dem eine Verbindung zu dem Server besteht, die offline aufgenommen Identitäts-Information und/oder weitere Identitäts-Information und/oder die wenigstens eine Fahrzeugkomponenten-Information und/oder die wenigstens eine Tätigkeits-Information und/oder die Abschätzungen an den Server übertragen werden und von dem Server auf der Basis dieser übertragenen Informationen der Umfang und/oder der Gesamtpreis und/oder die Einzelpreise der durchzuführenden Wartungs- und/oder Reparaturarbeiten von dem Server ermittelt und an das mobile Endgerät übertragen werden.

Bei einer besonderen Ausführung wird die reduzierte Kalkulationsdatenbank, insbesondere automatisch, aktualisiert, sobald wieder eine Verbindung zu dem Server hergestellt ist.

Insbesondere hierbei kann vorteilhaft vorgesehen sein, dass der Server als Server-Netzwerk mit mehreren Einzel-Servern ausgebildet ist. Beispielsweise kann ein erster Server des Servernetzwerks, der insbesondere die Fahrzeugdatenbank und/oder die Kundendatenbank aufweist, unmittelbar mit dem mobilen Endgerät kommunizieren, während beispielsweise die Kalkulation des Umfangs und/oder Gesamtpreises und/oder der Einzelpreise der durchzuführenden Wartungs- und/oder Reparaturarbeiten auf einem weiteren Server, der mit dem ersten Server kommuniziert, ermittelt werden. Hierbei kann insbesondere auch vorgesehen sein, dass sich der erste Server in der Reparaturwerkstatt befindet, während der weitere Server außerhalb der Reparaturwerkstatt aufgestellt ist und mit einer Vielzahl von Reparaturwerkstätten kommuniziert. Hierbei kann insbesondere auch vorgesehen sein, dass der weitere Server Ersatzteil preise oder Ersatzteilpreisfaktoren berücksichtigt, die auf dem ersten Server abgelegt sind.

Bei einer ganz besonders vorteilhaften Ausführung ist vorgesehen, dass eine spezifisch für das Fahrzeug und/oder für einen Fahrzeugtyp, zu dem das Fahrzeug gehört, ermittelte Prognose-Information für das Auftreten einer Panne und/der einer durchzuführenden Reparatur- und/oder eines Wartungsbedarfs an das Endgerät übermittelt wird. Die übermittelte Prognose kann insbesondere eine Information zu einem Zeitpunkt und/oder zu einer Zeitspanne und/oder zu einer Laufleistung beinhalten, zu der beziehungsweise zu dem ein Ausfall oder ein Verschleiß eines Typs einer Fahrzeugkomponente des Fahrzeuges wahrscheinlich ist und/oder mit einer Wahrscheinlichkeit von mehr als 50%, insbesondere von mehr als 70%, ganz insbesondere von mehr als 90% auftritt. Insbesondere kann die ermittelte Prognose-Information auch eine Information über den Umfang und/oder den Gesamtpreis und/oder die Einzelpreise der prognostizierten Wartungs- und/oder Reparaturarbeiten beinalten.

Bei einer besonderen Ausführung wird die Prognose-Information durch ein statistisches Auswerten des Suchverhaltens einer Vielzahl von Internetbenutzern nach Wartungs- und Reparaturleistungen ermittelt. Alternativ oder zusätzlich kann auch vorgesehen sein, dass die Prognose-Information durch folgende Schritte ermittelt wird:
a. Erfassen einer Vielzahl von Wartungs- und/oder Reparaturanfragen mittels eines computerbasierten Erfassungssytems, wobei die Wartungs- und/oder Reparaturanfragen jeweils Informationen über ein Fahrzeug und eine an diesem Fahrzeug zu erbringende Wartungs- und/oder Reparaturleistung beninhalten,
b. Untersuchen der erfassten Vielzahl von Wartungs- und/oder Reparaturanfragen nach wenigstens einer statistischen Auffälligkeit bezüglich d es, insbesondere zeitlichen, Ausfall- oder Verschleißverhaltens wenigstens eines Typs einer vorgegebenen oder vorgebbaren Fahrzeugkomponente, die auch der vorgegebene oder vorgebbare Fahrzeugtyp aufweist,
c. Ermitteln eines Zeitpunktes und/oder einer Zeitspanne und/oder einer Laufleistung, zu dem ein Ausfall oder Verschleiß der Fahrzeugkomponente wahrscheinlich ist und/oder mit einer Wahrscheinlichkeit von mehr als 50%, insbesondere von mehr als 70%, ganz insbesondere von mehr als 90% auftritt.

Eine solche Ausführung ganz besonderen Vorteil, dass eine auf hoher Wahrscheinlichkeit beruhende, zuverlässige Aussage darüber getroffen werden kann, nach welcher Zeitspanne und/oder nach welcher Laufleistung, welche Fahrzeugkomponente einen Wartungs- und/oder Reparaturbedarf hat und/oder eine erhöhte Gefahr für eine Panne besteht.

Hierbei wird vorteilhaft auf die Informationen zurückgegriffen, die diejenigen, die in einem Netzwerk, insbesondere im Internet, nach einer speziellen Reparatur- oder Wartungsleistung hinsichtlich ihres Fahrzeuges suchen, machen. Es wird dabei vorteilhaft ausgenutzt, dass der Enduser, der eine konkrete Suchanfrage startet, gezwungen ist, ganz konkret den Fahrzeugtyp, insbesondere hinsichtlich Typbezeichnung, Ausstattung und Motorisierung, anzugeben und darüber hinaus präzise Angaben darüber zu machen, welche Fahrzeugkomponente einer Reparatur und/oder einer Wartung bedarf beziehungsweise welche Fahrzeugkomponenten einer Reparatur und/oder einer Wartung bedürfen.

Die Erfindung macht sich in vorteilhafter Weise zu Nutze, dass einzelne Fahrzeugkomponenten, ganz insbesondere Verschleißteile, in aller Regel eine sehr spezifische Lebensdauer und/oder Laufleistung aufweisen und diese durch statistische Auswertung einer Vielzahl von Wartungs- und/oder Reparaturanfragen identifiziert werden können. Beispielsweise fällt es bei einer statistischen Auswertung auf, wenn eine Vielzahl von Fahrzeughaltern, deren Fahrzeuge hinsichtlich der Motorisierung identisch sind und baugleiche Motoren aufweisen, bezogen auf ihre Fahrzeuge zumeist nach einer Laufleistung von 140.000 bis 150.000 Kilometern nach einer Werkstatt zur Wartung der Steuerkette suchen. In einem solchen Fall ist beispielsweise davon auszugehen, dass bezogen auf diese Motorvariante im Bereich der angegebenen Laufleistung mit hoher Wahrscheinlichkeit mit einem Ausfall der Steuerkette oder zumindest mit einem Wartungsbedarf an der Steuerkette gerechnet werden kann.

Die Prognose-Information ermöglicht es dem Servicemitarbeiter, spezifisch für das Fahrzeug zusätzliche Wartungs- und/oder Reparaturdienstleistungen anbieten zu können, die mit dem eigentlichen Grund des Werkstattbesuchs nichts zu tun haben müssen und die Fahrzeugkomponenten betreffen können, deren Verschleißzustand und/oder deren bevorstehender Ausfall nicht ohne größeren Aufwand unmittelbar am Fahrzeug festgestellt werden kann. Wenn dem Servicemitarbeiter diese Prognose-Informationen und/oder auf der Basis dieser Prognose-Informationen kalkulierte Umfänge für Wartungs- und/oder Reparaturarbeiten und/oder Preise hierfür auf dem mobilen Endgerät bei einer solchen Ausführungsform angezeigt werden, hat der Servicemitarbeiter die Möglichkeit, den Endkunden sehr umfassend nicht nur über die akut sichtbaren und/oder die bei einer technischen Überprüfung erfassbaren Mängel zu informieren, sondern auch über andere zu erwartende technische Mängel des Fahrzeuges.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein Ausführungsbeispiel eines Ablaufdiagramms eines erfindungsgemäßen Verfahrens,
- Fig. 2: schematisch ein Ausführungsbeispiel eines erfindungsgemäßen System, und
- Fig. 3: schematisch ein weiteres Ausführungsbeispiel eines erfindungsgemäßen Systems.

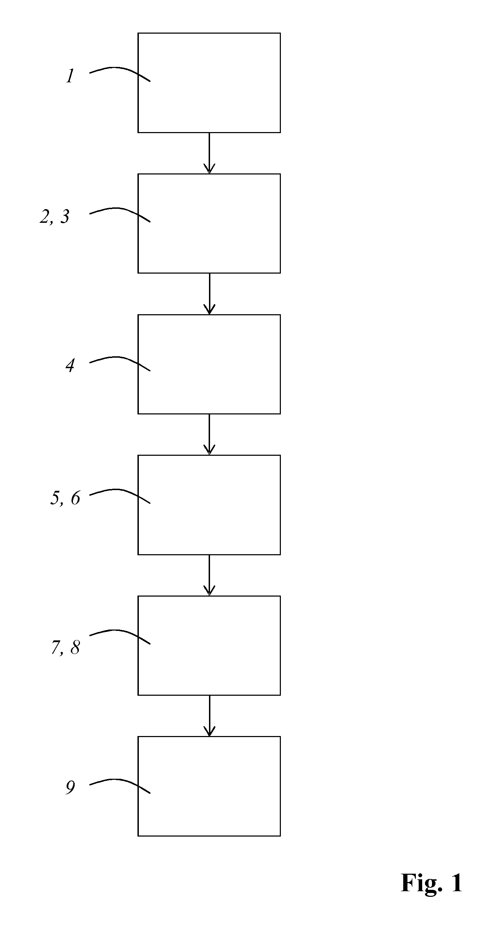

Figur 1 zeigt ein Ausführungsbeispiel eines Ablaufdiagramms bezogen auf eine mögliche Ausführungsform eines erfindungsgemäßen Verfahrens.

Das Verfahren beinhaltet den Schritt des Herstellens 1 einer, vorzugsweise drahtlosen, Netzwerkverbindung, zu einem Server mit einem mobilen Endgerät 11. Bei dem mobilen Endgerät kann es sich insbesondere um einen Tablet-Computer handeln. Die Verwendung eines mobilen Endgerätes 11 hat den ganz besonderen Vorteil, dass der Servicemitarbeiter 13 zusammen mit einem Kunden 14 unmittelbar an einem Fahrzeug 15 die zur Durchführung eines Wartungs- und/oder Reparaturvertrages erforderlichen Informationen aufnehmen kann. Das Endgerät 11, sowie der Servicemitarbeiter 13 und das Fahrzeug 15 sind in Figur 1 nicht dargestellt.

In einem nächsten Schritt erfolgt ein Eingeben 2 wenigsten einer Identitäts-Information in das mobile Endgerät 11, die eine, insbesondere eindeutige, Identifikation des Fahrzeugs 15 erlaubt. Bei der Identitäts-Information kann es sich beispielsweise um eine Fahrzeugidentifikationsnummer oder um ein amtliches Kennzeichen handeln. Es ist auch möglich, dass die Identitäts-Information eine Angabe bezüglich des Fahrzeughalters und/oder des Kunden 14 ist, wenn sichergestellt ist, dass der Halter nur ein einziges Fahrzeug hat. Es ist auch möglich, dass die Identitäts-Information eine Kombination aus mehreren Einzelinformationen, beispielsweise des Namens des Fahrzeughalters und des Namens des Fahrzeugherstellers ist, die geeignet ist, das in Rede stehende Fahrzeug bezüglich dem ein Wartungs- und/oder Reparaturvertrag geschlossen werden soll, zuverlässig zu identifizieren.

Alternativ oder zusätzlich zu einem Eingeben 2 der wenigstens eine Identitäts-Information kann auch ein Auswählen 3 der wenigstens einen Identitäts-Information aus einer aus dem mobilen Endgerät dargestellten Identitäts-Auswahldarstellung erfolgen. Hierzu kann insbesondere vorgesehen sein, dass der Server 12 (in Figur 1 nicht dargestellt) Identitäts-Information einer Vielzahl von Fahrzeugen aus einer Fahrzeugdatenbank und/oder einer Kundendatenbank entnimmt und an das mobile Endgerät 11 zum Erzeugen der Identitäts-Auswahldarstellung überträgt.

In einem nächsten Schritt erfolgt ein Identifizieren 4 von wenigstens einer zu wartenden und/oder zu reparierenden und/oder auszutauschenden Fahrzeugkomponente des Fahrzeuges 15. Bezüglich dieser Fahrzeugkomponente erfolgt anschließend ein Eingeben 5 einer spezifischen Fahrzeugkomponenten-Information bezüglich der identifizierten Fahrzeugkomponente in das mobile Endgerät. Alternativ oder zusätzlich kann auch vorgesehen sein, dass ein Auswählen 6 einer Darstellung der identifizierten Fahrzeugkomponente aus einer auf dem mobilen Endgerät dargestellten Fahrzeugkomponenten-Auswahldarstellung erfolgt und auf dieser Basis die Fahrzeugkomponenten-Information erzeugt wird. Insbesondere kann vorteilhaft vorgesehen sein, dass die Fahrzeugkomponenten-Auswahldarstellung einzelne Fahrzeugkomponententypen dem Servicemitarbeiter in Form von Abbildungen anzeigt. Alternativ oder zusätzlich ist es natürlich auch möglich, dass die Fahrzeugkomponententypen der Auswahldarstellung in geschriebener Form repräsentiert sind.

In einem weiteren Schritt erfolgt ein Eingeben 7 einer Tätigkeits-Information bezüglich der identifizierten Fahrzeugkomponente in das mobile Endgerät 11. Alternativ oder zusätzlich kann auch ein Auswählen 8 eines Typs einer Tätigkeit aus einer auf dem mobilen Endgerät 11 dargestellten Tätigkeiten-Auswahldarstellung erfolgen, auf deren Basis dann das Erzeugen der Tätigkeits-Information erfolgt.

Anschließend erfolgt ein Übertragen 9 der eingegebenen und/oder ausgewählten Informationen an den Server 12. Vorzugsweise werden die Fahrzeugkomponenten-Information und die Tätigkeits-Information der Identitäts-Informationen mittels des mobilen Endgeräts 11 vor dem Übertragen einander zugeordnet. Alternativ ist es auch möglich, dass ein Zuordnen nach dem Übertragen serverseitig erfolgt.

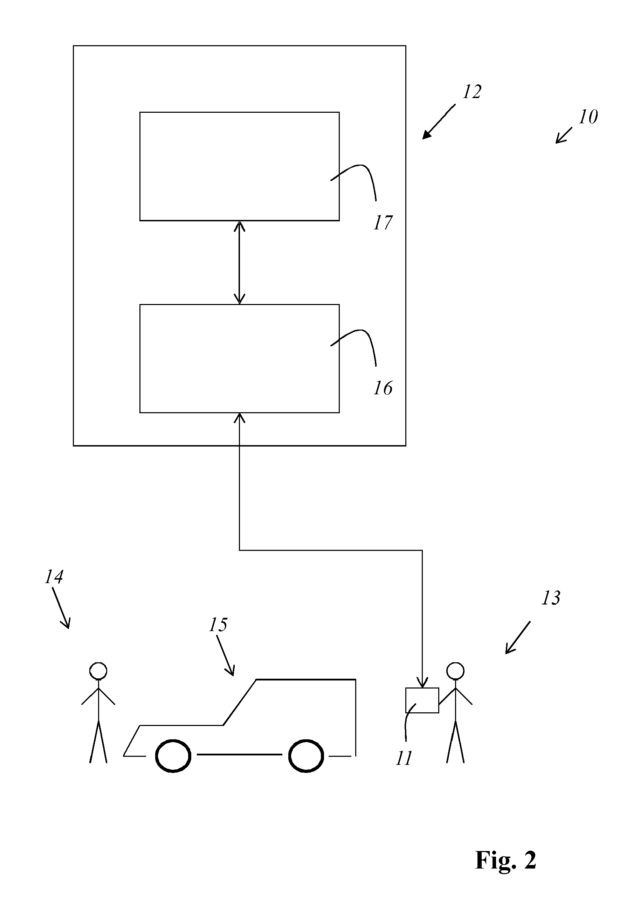

Figur 2 zeigt schematisch ein Ausführungsbeispiel eines erfindungsgemäßen Systems 10 zum Erfassen der zum Abschluss und zur Durchführung eines Wartungs- und/oder Reparaturvertrages betreffend ein Fahrzeug, insbesondere ein Kraftfahrzeug, erforderlichen Informationen. Das System 10 beinhaltet ein mobiles Endgerät 11, insbesondere einen Tablet-Computer, und einen Server 12. Das mobile Endgerät 11 ist dazu ausgebildet, insbesondere drahtlos, mit dem Server 12 verbunden zu werden. Dies in der Weise, dass Daten zwischen dem Server und dem mobilen Endgerät bidirektional übertragen werden können.

Ein Servicemitarbeiter 13, der mit dem mobilen Endgerät 11 ausgerüstet ist, hat die Möglichkeit, einen Kunden 14, der mit seinem Fahrzeug 15 die Werkstatt des Servicemitarbeiters 13 aufgesucht hat, direkt am Fahrzeug zu betreuen und dort sämtliche Informationen, die zum Abschluss der Durchführung eines Wartungs- und/oder Reparaturvertrages das Fahrzeugs 15 betreffend erforderlich sind, aufzunehmen. Hierbei besteht der besondere Vorteil, dass der Servicemitarbeiter über das mobile Endgerät 11, ohne das Fahrzeug 15 oder den Kunden 14 verlassen zu müssen, insbesondere fahrzeugspezifisch, auf Daten zugreifen kann, die der Sever 12 zur Verfügung stellt. Darüber hinaus kann der Servicemitarbeiter 13 über das mobile Endgerät 11 Daten an den Server 12 übermitteln.

Der Server 12 weist bei diesem Ausführungsbeispiel einen ersten Einzelserver 16 auf, der unmittelbar mit dem mobilen Endgerät 11 kommuniziert und der unter anderem eine Kundendatenbank beinhalten kann. Darüber hinaus weist der Server 12 einen weiteren Einzelserver 17 auf, der eine Fahrzeugkomponenten-Datenbank beinhaltet und der in der Lage ist, Umfang und/oder Gesamtpreis und/oder Einzelpreise und/oder einen Gesamtpreis spezifisch für die an dem Fahrzeug 15 vorzunehmenden Wartungs- und/oder Reparaturarbeiten zu kalkulieren. Der weitere Server 17 übermittelt derartige Informationen auf Anfrage des ersten Servers 16 an den ersten Server 16. Von dem ersten Server 16 werden diese Informationen, gegebenenfalls in aufbereiteter Form, an das mobile Endgerät 11 weitergeleitet, damit der Servicemitarbeiter 13 den Kunden 14 entsprechend beraten kann und entsprechende Angebote unterbreiten kann.

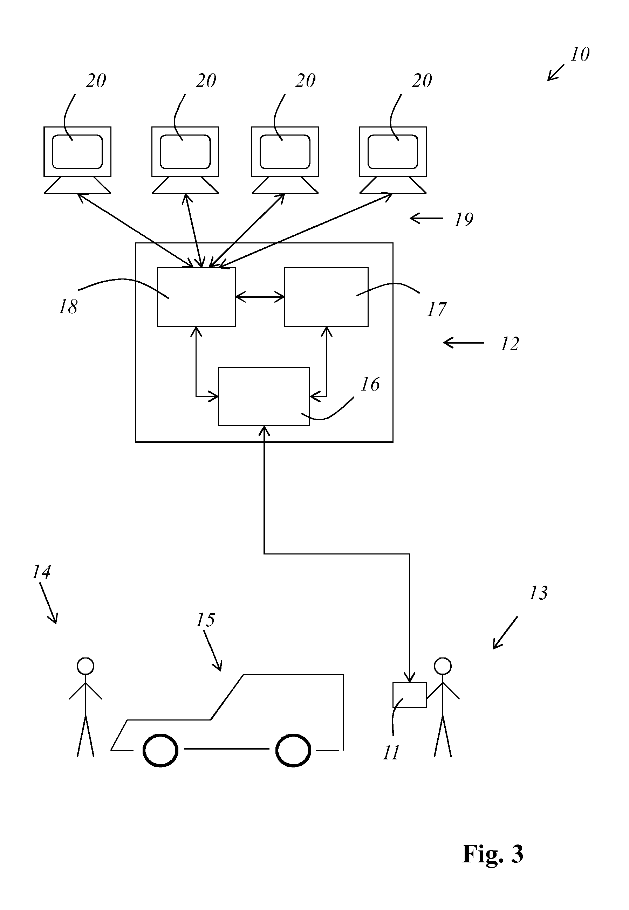

Figur 3 zeigt schematisch ein weiteres Ausführungsbeispiel eines erfindungsgemäßen Systems 10, das ebenfalls einen Server 12 aufweist, der mit einem mobilen Endgerät 11, das zur Bedienung durch einen Servicemitarbeiter 13 in einer Werkstatt bestimmt ist, kommuniziert.

Dieses Ausführungsbeispiel unterscheidet sich von dem in Figur 2 dargestellten Ausführungsbeispiel dadurch, dass der Server 12 einen dritten Einzelserver 18 aufweist, dessen Aufgabe es ist, fahrzeugspezifisch eine Prognose in Bezug auf einen aktuell anstehenden zusätzlichen Wartungs- und/oder Reparaturbedarf und/oder in Bezug auf einen zeitnah zu erwartenden Wartungs- und/oder Reparaturbedarf zu ermitteln.

Der dritte Einzelserver 18 ist dazu ausgebildet und bestimmt, über ein Netzwerk 19, insbesondere über das Internet, mit Computern 20 von Endnutzern, insbesondere von Fahrzeughaltern, verbunden zu werden und auf diesen Computern 20 jeweils eine Eingabe zur Verfügung zu stellen, die zur Eingabe einer fahrzeugspezifischen Wartungs- und/oder Reparaturanfrage ausgebildet und bestimmt ist. Der dritte Einzelserver 18 durchsucht die eingegebenen Informationen nach wenigstens einer statistischen Auffälligkeit bezüglich des Ausfall- oder Verschleißverhaltens der einzelnen Typen von Fahrzeugkomponenten.

Aufgrund dieser statistischen Auswertung ist es möglich, fahrzeugtypenspezifisch und/oder fahrzeugkomponententypspezifisch eine Aussage darüber zu treffen, nach welcher Zeitspanne und/oder nach Laufleistung mit einem Verschleiß und/oder einem Ausfall zu rechnen ist. Auf der Basis dieser Erkenntnisse kann der Server 12 eine Prognose ganz spezifisch in Bezug auf das Fahrzeug 15 des Fahrzeughalters 14 erstellen. Hierbei wird insbesondere ausgenutzt, dass einzelne Fahrzeugkomponenten, ganz insbesondere Verschleißteile, in aller Regel eine sehr spezifische Lebensdauer und/Laufleistung aufweisen und diese durch statistische Auswertung einer Vielzahl von Wartungs- und/oder Reparaturanfragen identifiziert werden können. Beispielsweise fällt es, wie oben bereits geschildert, bei einer statistischen Auswertung auf, wenn eine Vielzahl von Fahrzeughaltern, deren Fahrzeuge hinsichtlich der Motorisierung identisch sind, bezogen jeweils auf ihre Fahrzeuge zumeist nach einer Laufleistung von 140 000 -150 000 Kilometern nach einer Werkstatt zur Wartung der Steuerkette zu suchen. Falls nun das Fahrzeug 15 des Fahrzeughalters 14 genau diese Motorvariante aufweist und darüber hinaus bereits eine Laufleistung von 140 000 Kilometern absolviert hat, kann mit hoher Wahrscheinlichkeit vorhergesagt werden, dass alsbald ein Wartungsbedarf an der Steuerkette bestehen wird.

Diese Information teilt der Server 12 dem Servicemitarbeiter 13 über dessen mobiles Endgerät 11 mit, damit der Servicemitarbeiter 13 dem Kunden 14 ein entsprechendes Angebot unterbreiten kann. Dies kann unabhängig davon erfolgen, dass der Kunde 14 aus einem ganz anderem Grund die Werkstatt aufgesucht hat und auch unabhängig davon, welche weiteren Mängel bei einer Überprüfung des Fahrzeugs 15 im Rahmen der Dialogannahme festgestellt wurden.

### Bezugszeichenliste:

- 1: Herstellen einer Netzwerkverbindung
- 2: Eingeben einer Identitäts-Information
- 3: Auswählen aus einer Identitäts-Auswahldarstellung
- 4: Identifizieren
- 5: Eingeben einer Fahrzeugkomponenten-Information
- 6: Auswählen aus einer Fahrzeugkomponenten Auswahldarstellung
- 7: Eingeben einer Tätigkeitsinformation
- 8: Auswählen aus einer Tätigkeit-Auswahldarstellung
- 9: Übertragen
- 10: System
- 11: Mobiles Endgerät
- 12: Server
- 13: Servicemitarbeiter
- 14: Fahrzeughalter
- 15: Fahrzeug
- 16: Erster Einzelserver
- 17: Zweiter Einzelserver
- 18: Dritter Einzelserver
- 19: Netzwerk
- 20: Computer

## Patentansprüche

1. Verfahren zum Erfassen der zum Abschluss und zur Durchführung eines Wartungs- und/oder Reparaturvertrages betreffend ein Fahrzeug, insbesondere ein Kraftfahrzeug, erforderlichen Informationen, **gekennzeichnet durch** folgende Schritte:
a. Herstellen einer, vorzugweise drahtlosen, Netzwerkverbindung zu einem Server, mit einem mobilen Endgerät,
b. Eingeben in das mobile Endgerät und/oder Auswählen mit dem mobilen Endgerät aus einer auf dem mobilen Endgerät dargestellten Identitäts-Auswahldarstellung wenigstens einer Identitäts-Information, die eine Identifikation des Fahrzeugs erlaubt,
c. Identifizieren von wenigstens einer zu wartenden und/oder zu reparierenden und/oder auszutauschenden Fahrzeugkomponente des Fahrzeuges,
d. Eingeben einer Fahrzeugkomponenten-Information bezüglich der identifizierten Fahrzeugkomponente in das mobile Endgerät und/oder Auswählen einer Darstellung der identifizierten Fahrzeugkomponente aus einer auf dem mobilen Endgerät dargestellten Fahrzeugkomponenten-Auswahldarstellung und Erzeugen einer Fahrzeugkomponenten-Information auf der Basis der Auswahl,
e. Eingeben einer Tätigkeits-Information bezüglich der identifizierten Fahrzeugkomponente in das mobile Endgerät und/oder Auswählen einer Darstellung eines Tätigkeitstyps aus einer auf dem mobilen Endgerät dargestellten Tätigkeiten-Auswahldarstellung und Erzeugen einer Tätigkeits-Information auf der Basis der Auswahl,
f. Übertragen der eingegebenen und/oder ausgewählten Identitäts-Information und der Fahrzeugkomponenten-Information und der Tätigkeits-Information an den Server.

2. Verfahren nach Anspruch 1, **dadurch gekennzeichnet, dass** der Server Identitäts-Informationen einer Vielzahl von Fahrzeugen aus einer Fahrzeugdatenbank und/oder einer Kundendatenbank entnimmt und an das mobile Endgerät zum Erzeugen der Identitäts-Auswahldarstellung überträgt.

3. Verfahren nach Anspruch 1 oder 2, **dadurch gekennzeichnet, dass**
a. das mobile Endgerät wenigstens eine durchzuführende Überprüfungstätigkeit oder eine Reihe von Überprüfungstätigkeiten anzeigt, und/oder dass
b. das mobile Endgerät spezifisch für das Fahrzeug wenigstens eine durchzuführende Überprüfungstätigkeit oder eine Reihe von Überprüfungstätigkeiten anzeigt, und/oder dass
c. das mobile Endgerät unter Berücksichtigung des Fahrzeugtyps und/oder der Motorisierung und/oder der Fahrzeugausstattung des Fahrzeugs wenigstens eine durchzuführende Überprüfungstätigkeit oder eine Reihe von Überprüfungstätigkeiten anzeigt, und/oder dass
d. das Identifizieren von wenigstens einer zu wartenden und/oder zu reparierenden und/oder auszutauschenden Fahrzeugkomponente des Fahrzeuges auf der Basis des Ergebnisses der Überprüfungstätigkeit erfolgt.

4. Verfahren nach einem der Ansprüche 1 bis 3, **dadurch gekennzeichnet, dass**
a. auf der Basis der eingegebenen und/oder eingelesenen und/oder ausgewählten Identitäts-Information der Fahrzeugtyp des Fahrzeuges und/oder die Ausstattung des Fahrzeuges und/oder die Motorisierung des Fahrzeuges ermittelt wird, und/oder dass
b. der Server auf der Basis der Identitäts-Information des Fahrzeuges den Fahrzeugtyp des Fahrzeuges und/oder die Ausstattung des Fahrzeuges und/oder die Motorisierung des Fahrzeuges ermittelt, und/oder dass
c. der Server an Hand der eingegebenen und/oder eingelesenen und/oder ausgewählten Identitäts-Information wenigstens eine in einer Fahrzeugdatenbank und/oder einer Kundendatenbank gespeicherte, der Identitäts-Information zugeordnete, weitere Identitäts-Information sucht, und/oder dass
d. der Server an Hand der eingegebenen und/oder eingelesenen und/oder ausgewählten Identitäts-Information wenigstens eine in einer Fahrzeugdatenbank und/oder einer Kundendatenbank gespeicherte, der Identitäts-Information zugeordnete, weitere Identitäts-Information sucht, wobei der Server die der Identitäts-Information zugeordnete weitere Identitäts-Information an das mobile Endgerät übermittelt, oder dass
e. der Server an Hand der eingegebenen und/oder eingelesenen und/oder ausgewählten Identitäts-Information wenigstens eine in einer Fahrzeugdatenbank und/oder einer Kundendatenbank gespeicherte, der Identitäts-Information zugeordnete, weitere Identitäts-Information sucht, wobei der Server die der Identitäts-Information zugeordnete weitere Identitäts-Information an das mobile Endgerät übermittelt und das mobile Endgerät diese anzeigt, und/oder dass
f. die Identitäts-Information und/oder die weitere Identitäts-Information eine Information über die Ausstattung und/oder Motorvariante und/oder den Fahrzeughalter beinhaltet.

5. Verfahren nach einem der Ansprüche 1 bis 4, **dadurch gekennzeichnet, dass**
a. eine Vielzahl von Fahrzeugkomponenten-Informationen, die spezifisch und ausschließlich den ermittelten Fahrzeugtyp und/oder die ermittelte Ausstattung des Fahrzeuges und/oder die ermittelte Motorisierung des Fahrzeuges betreffen, von dem Server an das mobile Endgerät zum Erzeugen der Fahrzeugkomponenten-Auswahldarstellung übertragen wird, und/oder dass
b. eine Vielzahl von Fahrzeugkomponenten-Informationen, die spezifisch und ausschließlich den ermittelten Fahrzeugtyp und/oder die ermittelte Ausstattung des Fahrzeuges und/oder die ermittelte Motorisierung des Fahrzeuges betreffen, von dem Server an das mobile Endgerät übertragen wird und auf der Basis dieser Vielzahl von Fahrzeugkomponenten-Informationen die Fahrzeugkomponenten-Auswahldarstellung erzeugt wird.

6. Verfahren nach einem der Ansprüche 1 bis 5, **dadurch gekennzeichnet, dass**
a. das Eingeben der Fahrzeugkomponenten-Information ein optisches Erfassen, insbesondere ein Fotografieren und/oder Scannen, des Fahrzeugs oder eines Teils des Fahrzeugs und/oder eines dem Fahrzeug zugeordneten Fahrzeugdokuments und/oder der identifizierten Fahrzeugkomponente beinhaltet und/oder dass
b. das Eingeben der Fahrzeugkomponenten-Information ein optisches Erfassen, insbesondere ein Fotografieren und/oder Scannen, der identifizierten Fahrzeugkomponente beinhaltet, wobei das mobile Endgerät oder der Server eine durch das optische Erfassen erzeugte Abbildung der Fahrzeugkomponente mit in einer Datenbank abgelegten und einzelnen Fahrzeugkomponenten zugeordneten Abbildungen vergleicht.

7. Verfahren nach einem der Ansprüche 1 bis 6, **dadurch gekennzeichnet, dass**
a. auf der Basis der Identitäts-Information und/oder weiteren Identitäts-Information und/oder der wenigstens einen Fahrzeugkomponenten-Information und/oder der wenigstens einen Tätigkeits-Information der Umfang und/oder der Gesamtpreis und/oder die Einzelpreise der durchzuführenden Wartungs- und/oder Reparaturarbeiten ermittelt werden, oder dass
b. auf der Basis der Identitäts-Information und/oder weiteren Identitäts-Information und/oder der wenigstens einen Fahrzeugkomponenten-Information und/oder der wenigstens einen Tätigkeits-Information der Umfang und/oder der Gesamtpreis und/oder die Einzelpreise der durchzuführenden Wartungs- und/oder Reparaturarbeiten von dem Server ermittelt und an das mobile Endgerät übertragen werden, und/oder dass
c. der Umfang und/oder die Kosten der durchzuführenden Wartungs- und/oder Reparaturarbeiten unter Berücksichtigung der in einer Kalkulationsdatenbank fahrzeugkomponentenspezifisch und/oder tätigkeitsspezifisch abgelegten Kalkulationsinformationen ermittelt werden.

8. Verfahren nach einem der Ansprüche 1 bis 7, **dadurch gekennzeichnet, dass**
a. auf der Basis der Identitäts-Information und/oder weiteren Identitäts-Information und/oder der wenigstens einen Fahrzeugkomponenten-Information und/oder der wenigstens einen Tätigkeits-Information eine vorläufige Abschätzung bezüglich des Umfangs und/oder eine vorläufige Abschätzung bezüglich des Gesamtpreises und/oder eine vorläufige Abschätzung der Einzelpreise der durchzuführenden Wartungs- und/oder Reparaturarbeiten von dem mobilen Endgerät in einem Offline-Betrieb, in dem kein Kontakt zum Server besteht, ermittelt werden, und/oder dass
b. auf der Basis der Identitäts-Information und/oder weiteren Identitäts-Information und/oder der wenigstens einen Fahrzeugkomponenten-Information und/oder der wenigstens einen Tätigkeits-Information eine vorläufige Abschätzung bezüglich des Umfangs und/oder eine vorläufige Abschätzung bezüglich des Gesamtpreises und/oder eine vorläufige Abschätzung der Einzelpreise der durchzuführenden Wartungs- und/oder Reparaturarbeiten von dem mobilen Endgerät in einem Offline-Betrieb, in dem kein Kontakt zum Server besteht, unter Berücksichtigung der in einer reduzierten Kalkulationsdatenbank des mobilen Endgeräts fahrzeugkomponentenspezifisch und/oder tätigkeitsspezifisch abgelegten Kalkulationsinformationen ermittelt werden, und/oder dass
c. auf der Basis der Identitäts-Information und/oder weiteren Identitäts-Information und/oder der wenigstens einen Fahrzeugkomponenten-Information und/oder der wenigstens einen Tätigkeits-Information eine vorläufige Abschätzung bezüglich des Umfangs und/oder eine vorläufige Abschätzung bezüglich des Gesamtpreises und/oder eine vorläufige Abschätzung der Einzelpreise der durchzuführenden Wartungs- und/oder Reparaturarbeiten von dem mobilen Endgerät in einem Offline-Betrieb, in dem kein Kontakt zum Server besteht, unter Berücksichtigung der in einer reduzierten Kolkulationsdatenbank fahrzeugkomponentenspezifisch und/oder tätigkeitsspezifisch abgelegten Kalkulationsinformationen ermittelt werden, wobei die reduzierte Kalkulationsdatenbank Umfangsdurchschnittswerte und/oder Durchschnittspreisen und/oder Durchschnittspreisen und/oder Arbeitspreise bezüglich der häufigsten Ausführungsvarianten jeweils eines Fahrzeugkomponententyps, insbesondere der fünf häufigsten Ausführungsvarianten jeweils eines Fahrzeugkomponententyps, beinhaltet, und/oder dass
d. auf der Basis der Identitäts-Information und/oder weiteren Identitäts-Information und/oder der wenigstens einen Fahrzeugkomponenten-Information und/oder der wenigstens einen Tätigkeits-Information eine vorläufige Abschätzung bezüglich des Umfangs und/oder eine vorläufige Abschätzung bezüglich des Gesamtpreises und/oder eine vorläufige Abschätzung der Einzelpreise der durchzuführenden Wartungs- und/oder Reparaturarbeiten von dem mobilen Endgerät in einem Offline-Betrieb, in dem kein Kontakt zum Server besteht, ermittelt werden und dass anschließend in einem Online-Betrieb, in dem eine Verbindung zu dem Server besteht, die offline aufgenommen Identitäts-Information und/oder weitere Identitäts-Information und/oder die wenigstens eine Fahrzeugkomponenten-Information und/oder die wenigstens eine Tätigkeits-Information und/oder die Abschätzungen an den Server übertragen werden und von dem Server auf der Basis dieser übertragenen Informationen der Umfang und/oder der Gesamtpreis und/oder die Einzelpreise der durchzuführenden Wartungs- und/oder Reparaturarbeiten von dem Server ermittelt und an das mobile Endgerät übertragen werden.

9. Verfahren nach einem der Ansprüche 1 bis 8, **dadurch gekennzeichnet, dass**
a. eine spezifisch für das Fahrzeug und/oder für einen Fahrzeugtyp, zu dem das Fahrzeug gehört, ermittelte Prognose-Information für das Auftreten, insbesondere das Auftreten innerhalb eines vorgegeben oder vorgebbaren Zeitraumes, einer Panne und/oder einer künftigen, insbesondere innerhalb eines vorgegeben oder vorgebbaren Zeitraumes, durchzuführenden Reparatur- und/oder eines künftigen, insbesondere innerhalb eines vorgegeben oder vorgebbaren Zeitraumes, auftretenden Wartungsbedarfs an das mobile Endgerät übermittelt wird, oder dass
b. eine spezifisch für das Fahrzeug und/oder für einen Fahrzeugtyp, zu dem das Fahrzeug gehört, ermittelte Prognose-Information für das Auftreten, insbesondere das Auftreten innerhalb eines vorgegeben oder vorgebbaren Zeitraumes, einer Panne und/oder einer künftigen, insbesondere innerhalb eines vorgegeben oder vorgebbaren Zeitraumes, durchzuführenden Reparatur- und/oder eines künftigen, insbesondere innerhalb eines vorgegeben oder vorgebbaren Zeitraumes, auftretenden Wartungsbedarfs an das mobile Endgerät übermittelt wird und der Umfang und/oder der Gesamtpreis und/oder die Einzelpreise der prognostizierten Wartungs- und/oder Reparaturarbeiten ermittelt werden und/oder an das mobile Endgerät übertragen werden.

10. Verfahren nach Anspruch 9, **dadurch gekennzeichnet, dass** die Prognose-Information durch ein statistisches Auswerten des Suchverhaltens einer Vielzahl von Internetbenutzern nach Wartungs- und/oder Reparaturleistungen ermittelt wird und/oder dass die Prognose-Information durch folgende Schritte ermittelt wird:
a. Erfassen einer Vielzahl von Wartungs- und/oder Reparaturanfragen mittels eines computerbasierten Erfassungssytems, wobei die Wartungs- und/oder Reparaturanfragen jeweils Informationen über ein Fahrzeug und eine an diesem Fahrzeug zu erbringende Wartungs- und/oder Reparaturleistung beninhalten,
b. Untersuchen der erfassten Vielzahl von Wartungs- und/oder Reparaturanfragen nach wenigstens einer statistischen Auffälligkeit bezüglich d es, insbesondere zeitlichen, Ausfall- oder Verschleißverhaltens wenigstens eines Typs einer vorgegebenen oder vorgebbaren Fahrzeugkomponente, die auch der vorgegebene oder vorgebbare Fahrzeugtyp aufweist,
c. Ermitteln eines Zeitpunktes und/oder einer Zeitspanne und/oder einer Laufleistung, zu dem ein Ausfall oder Verschleiß der Fahrzeugkomponente wahrscheinlich ist und/oder mit einer Wahrscheinlichkeit von mehr als 50%, insbesondere von mehr als 70%, ganz insbesondere von mehr als 90% auftritt.

11. Verfahren nach einem der Ansprüche 1 bis 10, **dadurch gekennzeichnet, dass**
a. der Server als Server-Netzwerk von mehreren Einzel-Servern ausgebildet ist, und/oder dass
b. der Server als Server-Netzwerk von mehreren Einzel-Servern ausgebildet ist, wobei ein erster Server des Servernetzwerkes, der insbesondere die Fahrzeugdatenbank und/oder die Kundendatenbank aufweist, mit dem mobilen Endgerät verbunden wird und wobei der Umfang und/oder der Gesamtpreis und/oder die Einzelpreise der durchzuführenden Wartungs- und/oder Reparaturarbeiten und/oder die Prognose-Informationen von weiteren Server direkt an das mobile Endgerät oder indirekt über den ersten Server übermittelt werden, und/oder dass
c. auf der Basis des erfassten Wartungs- und/oder Reparaturbedarfs ein schriftlicher Wartungs- und/oder Reparaturvertrag erstellt wird, und/oder dass
d. auf der Basis des erfassten Wartungs- und/oder Reparaturbedarfs ein schriftlicher Wartungs- und/oder Reparaturvertrag erstellt wird, der auf einem Display des mobilen Endgerätes dargestellt wird, und/oder dass
e. ein Unterschriftsfeld auf einem als Touchscreen ausgebildeten Display des mobilen Endgerätes dargestellt wird, in dem ein Kunde einen Wartungs- und/oder Reparaturvertrag unterschreiben kann.

12. Computerprogramm **dadurch gekennzeichnet, dass**
a. das Computerprogramm als Endgerät-Computerprogramm ausgebildet ist und dazu ausgebildet und bestimmt ist, in den Arbeitsspeicher eines mobilen Endgerätes geladen zu werden, wobei das Endgerät-Computerprogramm Programmbefehle aufweist, die es ermöglichen, ein Verfahren nach einem der Ansprüche 1 bis 12 auszuführen, wenn das Endgerät-Computerprogramm auf einem mobilen Endgerät läuft, oder dass
b. das Computerprogramm als Server-Computerprogramm ausgebildet ist und dazu ausgebildet und bestimmt ist, in den Arbeitsspeicher eines Servers geladen zu werden, wobei das Server-Computerprogramm Programmbefehle aufweist, die es ermöglichen, ein Verfahren nach einem der Ansprüche 1 bis 12 auszuführen, wenn das Server-Computerprogramm auf einem Server läuft.

13. Mobiles Endgerät, insbesondere Tablet-Computer oder PDA oder Smartphone oder Computer mit Touchscreen, zur Ausführung eines Verfahrens nach einem der Ansprüche 1 bis 11, insbesondere mobiles Endgerät auf das ein Endgerät-Computerprogramm nach Anspruch 12 geladen ist und/oder auf dem ein Endgerät-Computerprogramm nach Anspruch 12 abläuft.

14. Server zur Ausführung eines Verfahrens nach einem der Ansprüche 1 bis 11, insbesondere Server, auf den ein Server-Computerprogramm nach Anspruch 12 geladen ist und/oder auf dem ein Server-Computerprogramm nach Anspruch 12 abläuft.

15. System zum Erfassen der zum Abschluss und zur Durchführung eines Wartungs- und/oder Reparaturvertrages betreffend ein Fahrzeug, insbesondere ein Kraftfahrzeug, erforderlichen Informationen, beinhaltend wenigstens ein mobiles Endgerät nach Anspruch 13 und einen Server nach Anspruch 14.
